# EUROPÄISCHE PATENTSCHRIFT

(11) **EP 2 870 021 B1**
(45) Veröffentlichungstag und Bekanntmachung des Hinweises auf die Patenterteilung: **27.04.2016**
(21) Anmeldenummer: 13733321.7
(22) Anmeldetag: 03.07.2013
(51) Int. Cl.: B60L 11/18

(54) **LADEKABEL UND VERFAHREN ZUR ERKENNUNG EINES LADEKABELS**
CHARGING CABLE AND METHOD FOR DETECTING A CHARGING CABLE
CÂBLE DE CHARGE ET PROCÉDÉ DE DÉTECTION D'UN CÂBLE DE CHARGE

(30) Priorität: 04.07.2012 DE 102012013857; 04.07.2012 DE 102012013865
(43) Veröffentlichungstag der Anmeldung: 13.05.2015
(73) Patentinhaber: Ebee Smart Technologies GmbH, 10829 Berlin (DE)
(72) Erfinder: MITSCHKE, Robert, 10245 Berlin (DE); HEPPNER, Henning, 10719 Berlin (DE); MORICH, Lars, 65604 Elz (DE)
(74) Vertreter: Bressel, Burkhard
(86) Internationale Anmeldenummer: PCT/EP2013/064040
(87) Internationale Veröffentlichungsnummer: WO 2014/006096

(56) Entgegenhaltungen:
- DE-A1-102009 059 862
- DE-A1-102010 014 417
- US-A1- 2012 133 326
- "IEC 61851-1:2010 - Electric vehicle conductive charging system - Part 1: General requirements", INTERNATIONAL STANDARD - IEC NORME INTERNATIONALE - CEI, X, XX, Bd. ed2.0, Nr. IEC 61851-1:2010, 25. November 2010 (2010-11-25), Seiten 1-104, XP008147718,

## Beschreibung

Die vorliegende Erfindung betrifft ein Ladekabel und ein Verfahren zur Erkennung eines Ladekabels, insbesondere zur Abbildung von sogenannten Carsharing-Prozessen. Elektrofahrzeuge befinden sich momentan bei verschiedensten Firmen in unterschiedlichen Stufen der Entwicklung. Erste Fahrzeuge sind serienreif und befinden sich in der Produktion. Viele weitere stehen vor der Einführung in den nächsten Jahren.

Die wesentliche Herausforderung bei Elektrofahrzeugen ist die Versorgung mit elektrischer Energie und deren Speicherung im Fahrzeug. Die Industrie experimentiert hier mit verschiedenen Typen von Batterien und mit verschieden Konzepten für die Stromanschlüsse zur Ladung der Batterien.

Mittlerweile haben sich diverse Standards für Steckertypen und Kommunikation zwischen Ladestation und Stecker durchgesetzt. Der in Europa am meisten verbreitete Standard ist der Standard ISO/IEC 61851. Bestandteil des Standards ist ein von Ladeinfrastruktur und Fahrzeug getrenntes Ladekabel.

Dieses Kabel stellt unter Verwendung von sechs durchgehenden Leitern bzw. Leitungen, nämlich Ladeleiter L1, L2 und L3, Neutralleiter N, einen Schutzleiter PE (Erde) und einen Pilotleiter PL (auch Control Pilot (CP) genannt) und einem Widerstand im Stecker des Kabel (Proximity (PP oder PX) oder Proximity Kontakt genannt) und zwei gleichartigen Steckern nach ISO/IEC 62196 eine Verbindung zwischen einer Ladeinfrastruktur und einem Fahrzeug her und erlaubt über die Auslegung des Widerstands eine Erkennung der maximalen Stromstärke, für welche das Kabel und der Stecker geeignet ist.

DE 10 2010 014 417 A1 offenbart ein solches Ladekabel mit erweiterter Funktionalität, wobei das Ladekabel an seinen jeweiligen Enden zwei Stecker, umfassend mindestens einen Proximity und einen Pilotleiter, aufweist, die mit einer Ladeinfrastruktur und einem Fahrzeug verbindbar sind, wobei das Ladekabel eine Logik aufweist, welche in den Steckern oder im Kabel selbst angeordnet sein kann. Die Logik enthält außerdem eine Kommunikationseinheit.

Elektromobilität unterscheidet sich hinsichtlich diverser Eigenschaften von der herkömmlich bekannten Mobilität mit Hilfe von Verbrennungsmotoren. Daher ist davon auszugehen, dass sich diese Mobilitätsform anfänglich auch in Kombination mit neuen Mobilitätsangeboten wie Carsharing, dem Einsatz in spezifischen Flotten und ähnlichen Kontexten durchsetzen wird. Diese Anwendungsfälle benötigen häufig den Einsatz von zusätzlicher Technik, vor allem im Bereich Informations- und Kommunikationstechnik (IKT), welche im Fahrzeug zusätzlich verbaut werden. Dieser Umstand ist aufwändig und verteuert die Umsetzung von bestimmten Geschäftsmodellen.

Durch das Vorhandensein eines Ladekabels im Elektrofahrzeug, dass weder Bestandteil der Ladeinfrastruktur noch des eigentlichen Fahrzeugs ist, zwei Domänen in denen flexible technische Neuerungen in kleinen Stückzahlen häufig nicht umsetzbar sind, bietet sich das Kabel als Verbauort für solche Technik an. Insofern geht der Trend zum Verbau von mehr Technik im Ladekabel.

Darüber hinaus müssen Betreiber von Ladeinfrastruktur in der Lage sein, Kunden zu erkennen, um einen Ladevorgang einem Abrechnungskonto zuzuordnen. Zusätzlich ist eine Anpassung der Kommunikationsmechanismen der Infrastruktur an unterschiedlichste Fahrzeuge erstrebenswert. Auch diese Anwendungsfälle lassen sich mit zusätzlicher Elektronik bzw. Logik im Kabel oder Stecker des Kabels gut abbilden, wodurch um bestimmte Funktionalitäten erweiterte Ladekabel entstehen.

In allen diesen Fällen ist es notwendig, dass ein um eine Logik erweitertes Ladekabel von der Infrastruktur erkannt und, wenn nötig, mit Strom versorgt wird. Dabei muss sich die Infrastruktur jedoch vollständig standardkonform verhalten, um zu gewährleisten, dass normale, standardkonforme und nicht um bestimmte Funktionalitäten erweiterte Kabel weiterhin verwendet werden können, um Fahrzeuge zu laden, die keinen erweiterten Anwendungsfall erfordern.

Gleichzeitig muss sich das um eine Logik für einen speziellen Anwendungsfall erweiterte Ladekabel gegenüber einer Ladeinfrastruktur, die keine Unterstützung für das erweiterte Verfahren bietet, ebenfalls vollständig standardkonform verhalten.

Aufgabe der vorliegenden Erfindung ist es daher ein Verfahren zur Erkennung eines spezifischen, d.h. erweiterten Ladekabels bzw. einer erweiterten Funktionalität des Ladekabels sowie ein verbessertes Ladekabel bereitzustellen, wobei mittels der Ladeinfrastruktur ohne Verletzung des Standards ISO/IEC 61851 das Ladekabel mit Strom zur Erfüllung der erweiterten Funktionalität versorgt werden kann.

Neben dem Ladekabel selbst und den Verfahren zur Erkennung eines Ladekabels durch Ladeinfrastruktur und Fahrzeug kann ein Ladekabel auch verwendet werden, um z.B. diverse Dienstleistungen rund um das Fahrzeug abzubilden, beispielsweise die Abwicklung einer Autovermietung in einem Carsharing-Prozess bzw. -Verfahren.

Beispielsweise beinhaltet die technische Abwicklung einer Autovermietung im Carsharing typischerweise die Funktionalitäten:
1. Erkennung und Authentifizierung des Kunden
2. Interaktion mit dem Kunden (z.B. Anzeigen von Hinweisen)
3. Blockierung des Fahrzeugs im Fall der Nicht-Vermietung
4. Ver- und Entriegeln der Türen des Fahrzeugs
5. Erkennung von Gegenständen im Fahrzeug

Durch das Vorhandensein eines Ladekabels im Elektrofahrzeug, dass weder Bestandteil der Ladeinfrastruktur noch des eigentlichen Fahrzeugs ist, zwei Domänen in denen flexible technische Neuerungen in kleinen Stückzahlen häufig nicht umsetzbar sind, bietet sich das Kabel wiederum als Verbauort für solche Technik an.

Eine weitere Aufgabe der vorliegenden Erfindung ist es daher, ein intelligentes, d.h. ein um bestimmte Funktionalitäten erweitertes Ladekabel und ein entsprechendes Verfahren bereitzustellen, das nicht nur dem bloßen Anschluss des Fahrzeugs an die Ladeinfrastruktur und der Ladung des Fahrzeuges dient, sondern durch Elektronik im Stecker des Kabels oder im Kabel selbst, z.B. die Carsharing-typischen Funktionen abbildet und somit den Verbau von zusätzlichen Komponenten im Fahrzeug erspart.

Die vorstehend angegebenen Aufgaben werden durch die erfindungsgemäßen Ladekabel und das erfindungsgemäßen Verfahren zum Erkennen der Ladekabel durch eine Ladeinfrastruktur gemäß den unabhängigen Ansprüchen gelöst. Vorteilhafte Ausführungsformen sind in den Unteransprüchen wiedergegeben.

Erfindungsgemäß wird dabei ein Verfahren geschaffen, mittels dem eine erweiterte Ladeinfrastruktur ohne Verletzung des Standards ISO/IEC 61851 ein Ladekabel mit erweiterter Funktionalität, also ein erweitertes Ladekabel, erkennen und/oder mit Strom zur Erfüllung dieser Funktionalität versorgen kann.

Das Verfahren kann vorzugsweise genutzt werden, um nach dem Erkennen des Kabels eine Kommunikations- und/oder Stromversorgungsleitung freizuschalten.

Nachfolgend werden die Begriffe "erweitertes Ladekabel" und "Ladekabel mit erweiterter Funktionalität" gleichbedeutend verwendet.

Der Begriff "erweiterte Ladestation" bzw. "erweiterte Ladeinfrastruktur" beschreibt dabei eine Ladestation bzw. Ladeinfrastruktur, die in der Lage ist, die erweiterten Ladekabel zu erkennen. Eine normale Ladestation kann das nicht. Eine normale Ladestation ist lediglich dafür eingerichtet, unter Anwendung des obigen Standards zu erkennen, dass ein normales Ladekabel über einen Stecker angeschlossen ist.

Das erweiterte Kabel funktioniert in diesem Fall dann als "normales" Ladekabel ohne erweiterte Funktion. Eine erweiterte Ladestation erkennt auf der anderen Seite ein erweitertes Ladekabel bzw. kann die spezifischen Eigenschaften auslesen, aktiviert die Funktion und erlaubt so die Nutzung der erweiterten Funktion.

Dementsprechend verhält sich das Ladekabel mit erweiterter Funktionalität vollständig standardkonform gegenüber einer normalen Ladeinfrastruktur ohne Unterstützung für Ladekabelmit erweiterter Funktionalität.

Der Standard ISO/IEC 61851 schreibt dabei, wie eingangs ausgeführt, für einen der sieben Kontakte des spezifizierten Steckertyps ISO/IEC 62196 Typ 2 einen Widerstand (Proximity) vor, mittels dem die Ladeinfrastruktur erkennt, mit welcher Stromstärke das Ladekabel maximal belastet werden kann.

Erfindungsgemäß werden dazu Kabel mit erweiterter Funktionalität mit unterschiedliche technische Lösung bereitgestellt, welche z.B. verschiedene Ausprägungen/Zustände solcher Widerstände verwenden, oder die Leistung, die vom Widerstand konsumiert wird, verwenden, um das Kabel durch die erweiterte Infrastruktur zu identifizieren und/oder mit Strom zu versorgen, um gegebenenfalls weitere Anwendungsfälle umzusetzen. Wenn an dieser Stelle von einer Stromversorgung gesprochen wird, ist ausdrücklich nicht die genormte Stromversorgung über die Ladeleiter L1, L2 und L3 gemeint, sondern eine nicht standardgemäße Stromversorgung des erweiterten Ladekabels bzw. seiner Logik selbst. Diese Stromversorgung wird ausschließlich über den Pilotleiter PL und/oder den Proximity gewährleistet bzw. geschaltet. So wird nach dem Erkennen des erweiterten Kabels die Logik, welche am Proximity und/oder am Pilotleiter anschließbar ist, mit Strom versorgt. Der Proximity umfasst dabei mindestens einen Proximity Kontakt und einen Proximity Widerstand.

Durch diese besondere, neuartige Bereitstellung einer Stromversorgung werden insbesondere zwei wesentlich Vorteile erreicht. Zum einen muss der Ladestrom zum Laden des Fahrzeuges, welcher wesentlich stärker ist, als für eine Logik benötigt, nicht in Niedrigvoltspannung aufwendig transformiert werden. Zum anderen kann auf den alternativen Einsatz von Drittstromversorgern für eine Kabel- oder Steckerlogik, wie Batterien oder Akkus oder dergleichen verzichtet werden.

Der Begriff "Logik" wird dabei synonym mit den Begriffen "Schaltung", "Elektronik" oder "Schaltungsanordnung" verwendet. Die Logik kann dabei erfindungsgemäß im Stecker oder im Kabel angeordnet sein. Befindet sich die Logik beispielsweise nicht im Stecker, sondern z.B. in einer separaten Hausung im Kabel, benötigt man auf einer Seite des Kabels gegebenenfalls insgesamt sieben Leitungen, um auch den Proximity Kontakt bis zur Logik im Kabel durchzukontaktieren.

Für die Erkennung der erfindungsgemäßen Kabel werden sowohl die Eigenschaften von Widerständen deren Induktivitäten, Leistungsverhalten und/oder Kondensatoren sowie der Datenkommunikation eingesetzt, wobei unter Datenkommunikation im einfachsten Fall bereits das Einstecken das Steckers eine Kommunikation darstellt. Beispielsweise verhalten sich die Werte von Widerständen in einer reproduzierbaren Art und Weise, je nachdem wie sie z.B. mit Spannung oder Strom beaufschlagt werden. Vergleichbares gilt beispielsweise für das Verhalten von Kondensatoren und deren Kapazitäten und Spulen und deren Induktivitäten.

Die genannte Eigenschaften, welche unterschiedliche Ausprägungen z.B. des Widerstands haben können, obwohl alle Ausprägungen gleichsam den Standard erfüllen, werden in einer erweiterten Ladestation ausgewertet, um einen erweiterten Kabeltyp bzw. ein erweitertes Ladekabel von einem herkömmlichen Ladekabel zu unterscheiden. Durch diesen Mechanismus wird nach der Erkennung weiterhin eine Kommunikations- und/oder Stromversorgungsleitung für die erweiterte Logik im erweiterten Kabel durch die Ladeinfrastruktur freigeschaltet. Mit anderen Worten ist eine erweiterte Ladestation ist in der Lage die erweiterten Ladekabel zu erkennen. Eine erweiterte Ladestation erkennt dann die spezifischen Eigenschaften, versorgt das Kabel mit Strom (damit ist nicht der Ladestrom für das Fahrzeug gemeint), aktiviert eine Logik und erlaubt so die Nutzung der erweiterten Funktionalität.

Die Erfindung nutzt also den im Standard ISO/IEC61581 geforderten Widerstand (Proximity) zur Erkennung der maximalen Stromstärke mit dem ein entsprechend standardkonformes Ladekabel belastet werden kann derart aus, dass Sie aus den Eigenschaften des geforderten Widerstandes zusätzlich Informationen ermittelt und diese zur Erkennung des erweiterten Kabels verwendet.

Wahlweise kann anstelle des geforderten "normalen" Widerstandes (in der Beschreibung spezifischer Widerstand genannt, da spezifisch für den Standard) ein besonderer Widerstand bzw. Proximity mit besonderer Charakteristik, z.B. im Ansprechverhalten, der Wärmeleistung o.ä. eingesetzt werden, wobei sich die Widerstandswerte nicht soweit verändern dürfen, sodass das erweiterte Ladekabel bei Ansprechen durch eine normale Ladestation noch als normales Ladekabel erkannt werden kann. Besonders bevorzugt ist es dabei, den Widerstand durch andere Bauelemente, welche sich bezüglich des geforderten (spezifischen) Widerstandes gleich verhalten, zu ersetzen, z.B. durch ein Relais.

Gemäß einem ersten Aspekt betrifft die vorliegende Erfindung verschiedene Ladekabel mit erweiterter Funktionalität und ein Verfahren zum Erkennen der Ladekabel, welche eine Ladeinfrastruktur, umfassend mindestens eine Ladestation, mit einer Gegenstelle, d.h. mit einem Fahrzeug oder einer anderen elektrischen aufladbaren Vorrichtung verbinden, um ihn mit Strom zu versorgen, wobei das Ladekabel an seinen jeweiligen Enden zwei nach ISO/IEC 61581 standardisierte Stecker (oder Buchsen) aufweisen, die mit einer Ladeinfrastruktur und einem Fahrzeug verbindbar sind. Diese Ladekabel mit erweiterter Funktionalität weisen dabei eine spezielle Logik auf, welche an den Proximity oder an den Pilotleiter anschließbar ist.

Unter Logik wird dabei eine speziell eingerichtete, elektrische Schaltung, mindestens umfassend einen einfachen Verbraucher, wie ein Lichtelement, und/oder eine Chipfunktionaliät, verstanden. Im Falle eines Lichtelementes kann diese dazu dienen, dem Nutzer des Kabels anzuzeigen, dass die Ladestation das Kabel als geeignet erkennt hat und die Logik mit Strom versorgt. Im einfachsten Fall kann das Lichtelement den geforderten Standard auch ersetzen, wenn sich die entsprechenden Widerstände gleich verhalten.

Nachfolgend werden verschiedene erfindungsgemäße Ladekabel mit erweiterter Funktionalität beschrieben.

Ladekabel mit erweiterter Funktionalität, wobei das Ladekabel an seinen jeweiligen Enden zwei vorzugsweise nach ISO/IEC 61581 standardisierte Stecker, umfassend mindestens einen Proximity und einen Pilotleiter, aufweist, die mit einer Ladeinfrastruktur und einem Fahrzeug verbindbar sind, wobei das Ladekabel eine Logik aufweist, welche in den Steckern oder im Kabel selbst angeordnet sein kann, wobei die Logik an den Proximity und/oder den Pilotleiter anschließbar ist, wobei das Ladekabel nach Verbindung mit der Ladestation und dem Fahrzeug durch die Ladestation derart ansprechbar ist, dass die Ladestation am Proximity erkennt, dass es sich um ein Ladekabel mit erweiterter Funktionalität handelt und die Logik mit Strom über den Proximity und/oder den Pilotleiter versorgbar ist.

Der Proximity kann dabei einen gegenüber dem Standard spezifischen Widerstand oder eine davon abgeleitete Eigenschaft, wie beispielsweise im Weiteren erläutert z.B. Induktivität, Kapazität, aufweisen

Mit anderen Worten kann der Proximity ansprechbare Eigenschaften wie Induktivität oder Kapazität aufweisen. Hierbei kann z.B. eine erweiterte Ladeinfrastruktur nicht nur ausschließlich den Widerstand, sondern zusätzlich durch Anlegen entsprechender Spannungsmuster, z.B. durch Anlegen von Wechselspannung, auch die Induktivität messen.

In einer weiteren bevorzugten Ausführungsform kann der Proximity anstelle eines für den standardisierten Stecker spezifischen Widerstandes ein Relais umfassen.

Bevorzugt können durch die nun stromversorgte Logik weitere Funktionen unabhängig von einer Ladung des Fahrzeuges, welche durch die Ladeleiter des Ladekabels erfolgt, bereitgestellt werden.

In einer ganz bevorzugten Ausführungsform des erfindungsgemäßen Ladekabels kann die Logik einen Carsharing-Prozess ohne direkte Beteiligung von Personen eines Carsharing-Unternehmens ermöglichen.

Ein weiteres erfindungsgemäßes Ladekabel, dass die durch den im Standard ISO/IEC 61581 geforderten Widerstand (Proximity im Stecker) konsumierte Leistung verwendet, kann besondere Anwendungsfälle umsetzen.

Diese Anwendungsfälle können unter anderem umfassen, eine, jedoch nicht ausschließliche, Beleuchtung eines Steckers oder den Betrieb simpler Logik, d.h. einfachste Schaltungsanordnungen, wie einer Steckzustandsanzeige. Im Gegensatz zum üblichen Ladekabel, wo der Widerstand durch einen einfachen Widerstand, der die aufgenommene Leistung in Wärme umwandelt umgesetzt ist, wird hier ein Verbraucher mit gleichem Widerstand verwendet, der die durch den Widerstand aufzunehmende Energie im Sinne der erweiterten Funktionalität nutzt. So können kleine energiesparende Leuchtelemente, z.B. LEDs den Nutzungskomfort des Ladekabels verbessern.

Mit anderen Worten, wird für den Anwendungsfall - Beleuchtung - der Widerstand durch eine LED mit einem in Reihe geschalteten Widerstand ersetzt. Alternativ kann eine Glühlampe mit einem in Reihe geschalteten Widerstand eingesetzt werden. Sobald der spezifische Widerstand bei der Erkennung des Kabels von dem Fahrzeug oder der Ladestation ausgelesen wird und dem Stecker sodann Energie zugeführt wird, leuchtet das Leuchtelement.

In einem weiteren Anwendungsfall kann das Leuchtelement als Steckzustandsanzeige ausgebildet sein. In der Praxis ist das Verriegeln des Steckers in der Buchse zur Ladestation und zum Fahrzeug als Teil des gesamten Ladeverfahrens nicht immer eindeutig durch den Anwender zu erkennen. Die Verriegelung erfolgt standardgemäß über einen Stift, der aus der Kupplung in den Stecker führt. Die Verriegelung ist für den Ladevorgang notwendig. Eine optische Hilfe in Form einer Steckzustandsanzeige vereinfacht nun den Informationszustand über die Verriegelung.

Die Steckzustandsanzeige kann unterschiedliche Leuchtelement, z.B. LED oder Glühlampe aufweisen. Diese können beispielsweise unterschiedliche Farben anzeigen. Sobald zwischen Stecker und Buchse ein Kontakt hergestellt wurde, kann ein Leuchtelement 1 leuchten. Sobald die Verriegelung der Kupplung in den Stecker sicher erfolgt ist, wird über einen z.B. mechanischen Wechsler das Leuchtelement 1 abgeschaltet und ein Leuchtelement2 eingeschaltet. Der mechanische Wechsler wird durch den Stift betätigt.

In einem weiteren Ausführungsbeispiel kann die Steckzustandsanzeige noch erweitert werden, um eine Anzeige für die ausreichende Einstecktiefe des Kabels im Fahrzeug und/oder der Ladestation zu ermöglichen. Dadurch werden an den jeweiligen Steckerenden Sensoren angebracht, die einen Kontakt erkennen und schließen, sobald das Kabel bzw. der Stecker ausreichend tief eingesteckt sind. Auf den Kontaktschluss folgt wiederum das Schalten eines weiteren Leuchtelements, das das ausreichend tiefe Stecken anzeigt.

Ein weiteres erfindungsgemäßes Ladekabel kann den in ISO/IEC 61851 geforderten Widerstand nutzen, um ihn mit Hilfe eines Relais im Kabel als den geforderte Widerstand umzusetzen bzw. zu ersetzen, wobei das Relais bei kurzzeitig erhöhter Spannung durch die Ladestation schaltet und in Folge dessen die Kommunikation mit dem Kabel inklusive mit einer Ladeinfrastruktur ermöglicht, wobei die Ladestation diese Eigenschaft nutzt und beim Einstecken jedes Kabel die Spannung kurzzeitig erhöht und danach die Kommunikationsfähigkeit testet.

Die erweiterte Ladestation erkennt also die erweiterte Funktion des Ladekabels dadurch, dass nach dem kurzzeitigen Anlegen der erhöhten Spannung die Kommunikation mit der Logik im Stecker des Ladekabels möglich ist. Ein konventionelles Ladekabel würde auf die Kommunikationsversuche nicht reagieren, da es kein Relais und keine entsprechend erfindungsgemäß angeschlossene Logik besitzt. Reagiert ein erweitertes Ladekabel auf die Kommunikationsversuche, so kann mittels dieser Kommunikation die erweiterte Funktionalität umgesetzt werden. Eine konventionelle Ladeinfrastruktur wiederum würde nicht kurzzeitig eine erhöhte Spannung anlegen und daher weiterhin den normgemäßen Widerstand messen und auch ein erweitertes Ladekabel wie ein konventionelles Ladekabel ausschließlich zur Fahrzeugladung, nicht jedoch zum Umsetzen der erweiterten Funktionalität, also über das klassische Laden des Fahrzeuges hinaus, einsetzen.

Mit anderen Worten, das Relais hat denselben Widerstand wie der spezifische Wiederstand im Stecker des Ladekabels. Beispielsweise wird der Widerstand mit 5V von der Ladestation ausgelesen. Bis zu dieser Spannung von 5V würde das Relais nicht schalten. Das Relais schaltet erst bei einer höheren Spannung von beispielsweise 7 bis 15, vorzugsweise 12 Volt.

Die Ladestation erhöht dazu für z.B. 200ms die Auslesespannung von 5V auf z.B. 12V. Das Relais schaltet innerhalb von z.B. 100 ms und schaltet somit den Pilotkontakt des Pilotleiters um, z.B. auf einen Kommunikationschip (oder ID-Chip). Die Ladestation kann nun über den Pilotkontakt die Kommunikation mit dem Ladekabel aufnehmen.

Die Logik wird über den Pilotleiter, nicht über die viel stärkeren Ladeleiter mit Energie für die Kommunikation versorgt.

Ist die Kommunikation erfolgreich, so wird das Ladekabel von der Ladestation als erweitertes Ladekabel akzeptiert und dann der Strom und die Kommunikationskontakte zwischen Ladestation und Ladekabel hergestellt.

Wird innerhalb der 200ms keine Kommunikation aufgebaut, so geht die Ladestation von einem herkömmlichen Kabel aus. Eine neue Messung kann z.B. nach einer Pause von einer Sekunde erfolgen.

Da das Auslesen des Widerstandes mit einer höheren Spannung als 5V zu einer höheren Dauerbelastung des Widerstandes führt, ist diese Dauerbelastung normalerweise nicht erlaubt und kann zu Fehlfunktionen führen.

Daher kann ein Auslesen mit höheren Spannungen bei normalen Ladestationen nicht erfolgen und somit kann ein unbeabsichtigtes Schalten des Relais nicht an normalen Ladestationen vorkommen.

Die Kommunikation erfolgt dabei über ein binäres Signal, welches entweder durch die erweiterte Ladestation oder die Logik im Stecker auf eine der sechs Leitungen auf ein gegebenenfalls vorhandenes Trägersignal aufmoduliert wird.

Ein weiteres erfindungsgemäßes Ladekabel, dass vorzugsweise den in ISO/IEC 61851 geforderten Widerstand mit einer spezifischen Induktivität mit einer dazu passender erweiterten Ladestation implementiert, die den Spannungsverlauf bei Schaltung und gegebenenfalls Veränderung der Spannung zur Abfrage des geforderten Widerstands misst und darüber Rückschlüsse auf die Eigenschaft des Kabels zieht, also beispielsweise, ob das eingesteckte Kabel ein erweitertes Ladekabel ist. Hierbei misst eine erweiterte Ladeinfrastruktur nicht ausschließlich den Widerstand, sondern zusätzlich durch Anlegen entsprechender Spannungsmuster auch die Induktivität. Wird das Kabel als erweitert erkannt, dann wird die Erweiterung bzw. die Logik mit Strom versorgt bzw. eingeschaltet.

Ein konventionelles Ladekabel bietet hier wegen der Nutzung eines konventionellen Widerstands keine messbare besondere Induktivität. Wird ein erweitertes Ladekabel, welches diese Eigenschaft der besonderen Induktivität aufweist, eingesetzt, kann jedoch die besondere Induktivität gemessen werden und dadurch das erweiterte Ladekabel als solches identifiziert werden. Wie im obigen Beispiel kann dann durch Anlegen einer bestimmten Spannung ein Relais geschaltet werden, welches die Stromzufuhr für die erweiterte Funktionalität, welche in der Logik liegt, ermöglicht und im Folgenden auch die Kommunikation zwischen erweitertem Kabel und erweiterter Ladeinfrastruktur freischaltet, was wiederum für die Umsetzung der erweiterten Funktionalität genutzt wird.

Nach Schaltung des Relais erfolgt die Kommunikation über ein binäres Signal, das die Gegenstelle, z.B. das Fahrzeug, direkt mit Spannung über ein auf eine Versorgungsspannung aufmoduliertes Signal oder ein anderes Kommunikationsverfahren, beispielsweise eine drahtlos Kommunikation via Bluetooth, WLAN oder Near Field Communication (NFC), versorgt. Die Logik im Kabel und die erweiterte Ladestation kommunizieren dazu miteinander.

Ein weiteres erfindungsgemäßes Ladekabel, nutzt den in ISO/IEC 61851 geforderten Widerstand mit einer parallelen spezifischen Kapazität mit dazu passender Ladestation, wobei der Spannungsverlauf bei Veränderung der Frequenz der Wechselspannung zur Abfrage des Widerstands und der Kapazität gemessen wird und darüber Rückschlüsse auf die Eigenschaft des Kabels durch die Ladestation gezogen werden. Auch in diesem Fall, wird die Existenz der Kapazität im erweiterten Kabel im Gegensatz zum konventionellen Kabel zur Identifikation des erweiterten Kabels genutzt. Anschließend wird durch das Schalten eines Relais, die Kommunikation mit dem erweiterten Kabel ermöglicht, um die erweiterte Funktionalität umzusetzen. Die Kommunikation erfolgt über ein binäres Signal, dass eine Gegenstelle, also das Fahrzeug oder einen anderen angeschlossene Vorrichtungdirekt mit Spannung versorgt, über ein auf eine Versorgungsspannung aufmoduliertes Signal oder ein anderes Kommunikationsverfahren.

Es versteht sich von selbst, dass die erläuterten Merkmale der verschiedenen erfindungsgemäßen Ladekabel mit einander kombinierbar und/oder austauschbar sind.

Nachfolgend werden das Grundprinzip und Ausgestaltungen der erfindungsgemäßen Ladekabel erläutert.

Die Erfindung nutzt, wie weiter oben beschrieben, den im Standard ISO/IEC61581 geforderten Widerstand zur Erkennung der maximalen Stromstärke mit dem ein entsprechend standardkonformes Ladekabel belastet werden kann.

Die Eigenschaften, die z.B. unterschiedliche Ausprägungen dieses Widerstands haben können, obwohl alle Ausprägungen gleichsam den Standard erfüllen, werden in einer erweiterten Ladestation ausgewertet, um einen erweiterten Kabeltyp bzw. ein erweitertes Ladekabel von einem herkömmlichen Ladekabel zu unterscheiden. Anschließend an die Erkennung wird eine Kommunikations- und/oder Stromversorgungsleitung, zunächst jedoch nicht die Ladeleitung, freigeschaltet.

Die Erfindung kann dabei folgende Ausführungsformen aufweisen.
Eine erweiterte Ladestation ist dafür ausgelegt nicht nur mit konventionellen Ladekabeln die normale Fahrzeugaufladung durchzuführen, sondern kann spezielle erweiterte Ladekabel erkennen. Eine erweiterte Ladestation ist also eine Ladestation, die dafür ausgelegt ist, herkömmliche Ladekabel und erweiterte Ladekabel mit erweiterter Funktion, wie bereits oben beschrieben, zu unterstützen.

Beispielsweise kann im erfindungsgemäßen Ladekabel ein Relais eingesetzt werden, dass bei einer bestimmten Spannung schaltet. Erfindungsgemäß erfolgt dann die Erkennung des Ladekabels hier durch das Relais, das den geforderten Widerstand des Standards einhält. Bis zu einer bestimmten Spannung schaltet das Relais nicht. Erhöht die erweiterte Ladestation nun zum Zweck der Erkennung der oben beschriebenen erweiterten Ladekabel für kurze Zeit die Spannung mit der der Widerstand ausgelesen wird, so wird die Schaltspannung des Relais überschritten und eine leitende Verbindung zu Kommunikation und/oder Stromversorgung wird hergestellt.

Im Fall des Einsatzes eines normalen Ladekabels an einer erweiterten Ladestation wird trotz kurzzeitig erhöhter Spannung kein Relais geschaltet. Die Ladestation erkennt dies durch ein Fehlschlagen der Kommunikation, d.h. es wird keine Kommunikation aufgebaut und keine erweiterte Funktion genutzt. Die Funktion der konventionellen Fahrzeugladung bleibt hiervon jedoch unberührt.

Im Fall des Einsatzes eines erweiterten Ladekabels an einer normalen Ladestation erfolgt der übliche Vorgang des Auslesens des Widerstands fehlerfrei, das Relais schaltet wegen der fehlenden Spannungserhöhung nicht. Es würde also das erweiterte Ladekabel als normales Ladekabel erkannt und der Ladestrom über die Ladeleiter L1, L2 und L3 bereitgestellt. Auch in diesem Fall wird jedoch die erweiterte Funktion im erweiterten Kabel nicht genutzt.

Weiterhin kann eine Serienschaltung des im ISO/IEC61581 geforderten Widerstands und eine spezifische Induktivität eingesetzt werden. Erfindungsgemäß erfolgt dann die Erkennung des Ladekabels hier durch die Serienschaltung von dem geforderten Widerstand mit einer spezifischen Induktivität. Durch Messungen des Spannungsverlaufs beim Anlegen und Variieren der Wechselspannung innerhalb des vom Standard zulässigen Bereichs, erkennt die Ladestation die spezifische Induktivität und somit das spezifische Kabel und kann durch zusätzliche Mechanismen wie das vorher beschriebene Schalten einer höheren Spannung und damit das Schalten eines Relais weitere Verbindungen freischalten, die dann über den Standard hinaus gehende Kommunikation zwischen Kabel und Ladestation sowie eine Stromversorgung der gegebenenfalls im Kabel integrierten Logik ermöglichen.

Im Fall des Einsatzes eines normalen Ladekabels an einer erweiterten Ladestation kann die spezifische Induktivität nicht erkannt werden. Somit erfolgt auch keine Spannungserhöhung durch die Ladestation und sie verhält sich standardkonform.

Im Fall des Einsatzes eines erweiterten Ladekabels an einer normalen Ladestation erfolgt der übliche Vorgang des Auslesens des Widerstands und der spezifischen Induktivität mit Gleichspannung fehlerfrei. Da die Spannung jedoch innerhalb des spezifizierten Bereichs bleibt, erfolgt keine Schaltung des Relais und keine Kommunikation mit dem Kabel.

Weiterhin kann ein parallel geschalteter spezifischer Widerstand und eine spezifischer Kapazität eingesetzt werden. Erfindungsgemäß erfolgt dann die Erkennung des Ladekabels hier durch eine Parallelschaltung, bestehend aus dem geforderten Widerstand des Standards und einem Kondensator. Durch Messungen des Spannungsverlaufs beim Anlegen und Variieren der Wechselspannung innerhalb des vom Standard zulässigen Bereichs erkennt die Ladestation die spezifische Kapazität und somit das erweiterte Kabel und kann durch zusätzliche Mechanismen wie das vorher beschriebene Schalten einer höheren Spannung und damit das Schalten eines Relais weitere Verbindungen freischalten, die dann über den ISO-Standard hinaus gehende Kommunikation zwischen Kabel und Ladestation sowie die Stromversorgung der gegebenenfalls im Kabel integrierten Logik ermöglichen.

Im Fall des Einsatzes eines erweiterten Ladekabels an einer normalen Ladestation erfolgt der übliche Vorgang des Auslesens des Widerstands fehlerfrei. Da die Spannung jedoch innerhalb des spezifizierten Bereichs bleibt, erfolgt keine Schaltung des Relais und keine Kommunikation mit dem Kabel.
Nachfolgend werden Kommunikationsvarianten bei den zuvor beschriebenen erfindungsgemäßen Ladekabeln bzw. Verfahren erläutert.

Bei den zuvor beschriebenen Kabeln wird jeweils der Pilotleiter oder Proximity des Ladekabels bzw. Steckers für die Kommunikation und/oder den Stromfluss geschaltet. Befindet sich die Logik beispielsweise nicht im Stecker sondern z.B. in einer separaten Hausung im Kabel, müssen auf einer Seite des Kabels gegebenenfalls sieben Leitungen vorgesehen sein, um die Proximity Leitung jeweil bis zur Logik im Kabel durchzukontaktieren. Die Kommunikation mittels derer das Kabel weiter genauer identifiziert werden kann, kann auf unterschiedliche Wege bewerkstelligt werden.

Einerseits kann mittels entsprechender durch die erweiterte Ladestation erzeugter Spannungsverläufe von der Logik, z.B. dem Chip, im erweiterten Ladekabel als binäre Kommunikation interpretiert werden und gleichzeitig die Logik mit Energie versorgen, die dieser dann zur Rückkommunikation verwendet, wobei das Kabel direkt erkannt wird. Die Logik, z.B. der Chip, im erweiterten Ladekabel nutzt die Energie des binären Signals selbst, um das binäre Signal zu interpretieren und eine Antwort zu senden.

Alternativ kann die Kommunikation auf einen Spannungsverlauf der Stromversorgung aufmoduliert werden. Dabei sorgt die Stromversorgung selbst für die Versorgung der Logik des Ladekabels. Das aufmodulierte Signal wird von der Gegenseite ausgewertet und mit einem entsprechend wiederum aufmodulierten Signal beantwortet.

In einer besonderen zusätzlichen Ausführungsform wird die Leistung des Widerstands für zusätzliche Funktionen genutzt.
Der im Standard geforderte Widerstand verbraucht elektrische Energie, die im Normalfall als Verlustleistung in Wärme umgewandelt wird. Der Widerstand, welcher zur Erkennung des normalen Ladekabels benötigt wird, wird typischerweise direkt im Stecker verbaut und die Energie nicht weiter genutzt.
Der Standard fordert jedoch nicht diese übliche Umsetzung. Anstelle die Energie in Verlustwärme umzusetzen, kann der Widerstand auch durch andere Bauteile mit Zusatznutzen erzeugt werden. Typische Anwendungsfälle umfassen u.a. die Beleuchtung des Steckergehäuses, die Beleuchtung des jeweils gegenüberliegenden Steckerteils zum Erleichtern des Findens des Steckplatzes an Fahrzeug oder Ladestation, den Betrieb einfacher Logik wie einer Anzeige des Zustands des Ladevorgangs.
Gemäß einem zweiten Aspekt betrifft die vorliegende Erfindung verschiedene Ladekabel und ein Verfahren zum Erkennen der Ladekabel bzw. ein erweitertes Ladekabel, zur Durchführung weiterer Aktionen, insbesondere von Dienstleistungen im Zusammenhang mit einem Fahrzeug ohne zusätzlichen Eingriff in das Fahrzeug selbst bereitstellen kann. Bei den Dienstleistungen kann es sich beispielsweise um solche handeln, die wesentliche Funktionen eines Carsharing-Prozesses bzw. -Verfahrens abbilden.
Die Logik bzw. Elektronik im erfindungsgemäßen Kabel kann dabei, nach dem Erkennen des Kabels durch die erweiterte Infrastruktur und Freischaltung des Stroms für die Logik, beispielsweise die Erkennung des Kunden, die Interaktion mit dem Kunden sowie die Ver- und Entriegelung der Türen per Funk übernehmen. Weitere Ausbaustufen könnten über drahtlose Kommunikation mit im Fahrzeug verbauten Komponenten zur Ortung von Fahrzeugschlüssel und Tankkarte kommunizieren. Dadurch wird ein kostenintensiver und jeweils an den Fahrzeugtyp angepasster Einbau von entsprechender Logik in jedes Fahrzeug vermieden.

Ein erster Aspekt betrifft ein erfindungsgemäßes Ladekabel mit erweiterter Funktionalität, das durch eine im Kabel oder in einem Stecker des Kabels integrierte Logik bzw. Elektronik, umfassend ein Kommunikationsmodul zur Kommunikation mit der erweiterten Ladestation, beispielsweise zur Aufmodulierung von Signalen auf die Stromversorgung, ein Display sowie ein weiteres Kommunikationsmodul, beispielsweise für Mobilfunkkommunikation zum Datenaustausch mit einem Backendserver, welcher Meldungen für den Benutzer anzeigen kann und optional über eine Eingabemöglichkeit Eingaben vom Benutzer entgegen nimmt und dabei Daten sowohl mit einem Backendserver als auch der erweiterten Ladestation austauscht.

Ein zweiter Aspekt betrifft ein erfindungsgemäßes Ladekabel, dass durch im Kabel oder in einem Stecker des Kabels integrierte Logik, umfassend ein Kommunikationsmodul und eine Lesetechnologie für Funktransponder, Kunden identifizieren kann, die Identifikationsmerkmale an ein Backendserversystem überträgt und aus der Antwort des Systems weitere Aktionen, wie dem Start einer Carsharing Transaktion oder eines Vermietvorganges ableitet.

Der erste und zweite Aspekt können kombiniert werden.

Ein dritter Aspekt betrifft ein Ladekabel, umfassend eine Logik bzw. Elektronik im Kabel oder in einem Stecker des Kabels zur Ansteuerung der Türver- und Entriegelung über ein integriertes Funkschlüsselmodul.

Der erste bis dritte Aspekt können einzeln oder gemeinsam kombiniert werden, wobei das Ladekabel zur Umsetzung eines personallosen Anmietprozesses von Elektrofahrzeugen verwendet werden kann, wobei die Erkennung des Kunden, die Authentifizierung des Kunden über ein Backendserversystem, die Interaktion mit dem Kunden, die Ver- und Entriegelung des Fahrzeugs sowie die Ausnutzung der Fahrzeugimmobilisierung über die Steuerung der Ver- und Entriegelung des Ladesteckers an Fahrzeug und Ladestation umfasst sein können.

Ein vierter Aspekt betrifft ein Ladekabel umfassend eine Elektronik im Kabel oder in einem Stecker des Kabels zur Interaktion über Nahfunktechnologie (NFC) mit einem im Fahrzeug verbauten Aufnahmegerät zur Aufnahme und Erkennung von Gegenständen (z.B. Fahrzeugschlüssel oder Tankkarte).

Der erste bis vierte Aspekt können einzeln oder gemeinsam kombiniert werden, wobei zur Umsetzung eines personallosen Anmietprozesses von Elektrofahrzeugen, wobei die Erkennung des Kunden, die Authentifizierung des Kunden über ein Backendserversystem, die Interaktion mit dem Kunden, die Ver- und Entriegelung des Fahrzeugs sowie die Ausnutzung der Fahrzeugimmobilisierung über die Steuerung der Ver- und Entriegelung des Ladesteckers an Fahrzeug und Ladestation sowie zusätzlich der Erkennung von Gegenständen im Fahrzeug umfasst sein können.

Nachfolgend werden das Grundprinzip und Ausgestaltungen der erfindungsgemäßen Ladekabel erläutert.

Die Erfindung basiert auf einem erweiterten Ladekabel zur Verbindung von vorzugsweise Elektrofahrzeugen mit einer Ladeinfrastruktur, dass eine zusätzliche integrierte Logik bzw. Elektronik im Stecker des Ladekabels oder im Ladekabel selbst enthält, die durch eine erweiterte Ladeinfrastruktur mit Strom über den Pilotleiter PL des Ladekabels versorgt wird. Beispielhaft kann die Elektronik ein drahtloses Kommunikationsmodul, beispielsweise zur Kommunikation über Mobilfunknetze oder Wireless LAN zur Kommunikation mit einem Backend Server entfalten.

Das Ladekabel bildet mit Hilfe der integrierten Logik eine oder mehrere der für das Carsharing wesentlichen Funktionen ab, von denen nachfolgend ohne Anspruch auf Vollständigkeit einige genannt werden.

Weitere hier nicht genannte Funktionen, beispielsweise auch die klassische Fahrzeugvermietung können abgebildet werden.

Durch diese Erfindung kann das Carsharing-Verfahren ohne direkte personelle Beteiligung des Carsharing-Unternehmens an jedem beliebigen Ort und zu jeder Zeit durchgeführt werden.

### Erkennung des Kunden

Die Erkennung des Kunden kann durch das Ladekabel über einen im Kabel verbauten Erkenner von passiven Funktranspondern (RIFD) erfolgen. Der Kunde hält dabei seine mit dieser Technologie ausgestattete Kundenkarte an den Stecker des Kabels. Das Kabel kommuniziert sodann über das integrierte Kommunikationsmodul mit dem Backendserver und identifiziert und autorisiert den Kunden.

### Interaktion mit dem Kunden

Die Interaktion mit dem Kunden kann durch eine Benutzerschnittstelle des Kabels erfolgen, welche als Teil der Logik im Stecker des Kabels oder separat im Kabel eingebaut sein kann. Mittels einem Display und gegebenenfalls zusätzlichen am Kabel angebrachten Eingabevorrichtung, zum Beispiel Eingabe-Tasten, kann das Kabel, beispielsweise über ein integriertes Display Meldungen anzeigen, die dem Carsharing-Prozess dienen oder die direkt vom Backend über das Kommunikationsmodul an das Kabel übertragen wurden und Eingaben des Benutzers entsprechend entgegennehmen und sogar Übertragen.

### Ver- und Entriegeln der Türen des Fahrzeugs

Die Ver- und Entriegelung des Fahrzeugs kann über die Elektronik im Kabel erfolgen.

Dabei gibt es zwei wesentliche Ausprägungsvarianten.

In einer ersten Variante erfolgt der Verbau einer Fahrzeugschlüsselelektronik oder einer in der Funktion entsprechenden Elektronik im Kabel. Dabei wird die Funktion der drahtlosen Türöffnung des Schüssels nicht über einen Tastendruck sondern über einen elektrischen Impuls des Kabels auf die Schlüsselelektronik ausgelöst. Da sich das Kabel beim Laden an einer Ladeinfrastruktur immer in unmittelbarer Nähe zum Fahrzeug befindet, ist eine Erreichbarkeit des Fahrzeugs immer gegeben.

In einer zweiten Variante wird eine Interaktion über die direkte Kommunikation mit dem Fahrzeug über die Ladeschnittstelle genutzt. Diese erlaubt heute auf Basis des Standards noch kein Ver- und Entriegeln der Türen, diese Funktionalität kann aber in Fahrzeugen nachgerüstet werden.

Das Ladekabel mit Carsharing-Unterstützung erlaubt das Entriegeln der Türen nur nach erfolgreicher Erkennung und Autorisierung des Kunden.

### Immobilisieren des Fahrzeugs

Die Funktion der Immobilisierung eines Elektrofahrzeugs ist schon von der Standardisierung der Interaktion zwischen Ladeinfrastruktur und Fahrzeug gegeben. Ein Elektrofahrzeug, das mit einer Ladeinfrastruktur verbunden ist, ist immobilisiert und bewegt sich nicht.

Das erweiterte Kabel kann durch die Interaktion mit dem Fahrzeug und der Ladeinfrastruktur verhindern, dass die vom Standard geforderte Verriegelung des Kabels im Fahrzeug und der Ladestation gelöst werden kann und dass das Kabel aus dem Fahrzeug oder der Ladesäule entfernt wird. Dadurch bleibt das Fahrzeug dauerhaft immobilisiert. Das Ladekabel mit Carsharing-Unterstützung erlaubt das Lösen der Entriegelung und damit des Kabels nur nach erfolgreicher Erkennung und Authentifizierung des Kunden.

### Erkennung von Gegenständen im Fahrzeug

Das erfindungsgemäße, intelligente Ladekabel mit Carsharing-Unterstützung kann eine weitere Kommunikationseinheit enthalten mittels derer Sie mit einer im Fahrzeug verbauten Halterungsvorrichtung zur Aufnahme und Erkennung des Fahrzeugschlüssels und gegebenenfalls anderer Gegenstände wie beispielsweise Tankkarten interagiert. Dadurch kann sichergestellt werden, dass bei Abgabe und damit Verriegelung des Fahrzeugs alle zum Fahrzeug gehörigen Gegenstände weiterhin im Fahrzeug sind.

Diese Kommunikationseinheit kann drahtlos, beispielsweise unter Verwendung von Nahfunktechnologien wie Bluetooth oder anderen NFC Technologien ausgeprägt sein oder aber unter Einsatz von direkter Fahrzeugkommunikation über das Ladekabel erfolgen. Wie im vorigen Fall würde letztere Variante eine Erweiterung der Fahrzeugkommunikation über das Ladekabel notwendig machen. Vorgenannter erster Fall würde nur das Verbauen einer entsprechenden Aufnahmeeinheit mit Nahfunktechnologie erfordern.

## Patentansprüche

1. Ladekabel mit erweiterter Funktionalität, wobei das Ladekabel an seinen jeweiligen Enden zwei vorzugsweise nach ISO/IEC 61851 standardisierte Stecker, umfassend mindestens einen Proximity und einen Pilotleiter, aufweist, die mit einer Ladeinfrastruktur und einem Fahrzeug verbindbar sind, **dadurch gekennzeichnet, dass** das Ladekabel eine Logik aufweist, welche in den Steckern oder im Kabel selbst angeordnet sein kann, wobei die Logik an den Proximity und/oder den Pilotleiter anschließbar ist, wobei das Ladekabel nach Verbindung mit der Ladestation und dem Fahrzeug durch die Ladestation derart ansprechbar ist, dass die Ladestation am Proximity erkennt, dass es sich um ein Ladekabel mit erweiterter Funktionalität handelt und die Logik mit Strom über den Proximity und/oder den Pilotleiter versorgbar ist.

2. Ladekabel nach Anspruch 1, **dadurch gekennzeichnet, dass** der Proximity ansprechbare Eigenschaften wie Induktivität oder Kapazität aufweist.

3. Ladekabel nach Anspruch 1, **dadurch gekennzeichnet, dass** der Proximity anstelle eines für den standardisierten Stecker spezifischen Widerstandes ein Relais umfasst.

4. Ladekabel nach den vorhergehenden Ansprüchen 1 bis 3, **dadurch gekennzeichnet, dass** durch die Logik weitere Funktionen unabhängig von der Ladung des Fahrzeuges bereitstellbar sind.

5. Ladekabel nach einem der vorstehenden Ansprüche, **dadurch gekennzeichnet, dass** die Logik einen Carsharing-Prozess ohne direkte Beteiligung von Personen eines Carsharing-Unternehmens ermöglicht.

6. Ladekabel nach Anspruch 1, dass die durch den im Standard ISO/IEC 61851 geforderten Widerstand konsumierte Leistung mittels einer Logik einsetzt, um damit die Beleuchtung eines Steckers des Ladekabel oder den Betrieb simpler Logik, wie einer Steckzustandsanzeige zu steuern.

7. Ladekabel nach Anspruch 1, dass den in ISO/IEC 61851 geforderten Widerstand mit Hilfe eines Relais mit dem spezifischen Widerstand umsetzt, das bei kurzzeitig erhöhter Spannung schaltet und in Folge die Kommunikation mit dem Kabel inklusive einer Ladeinfrastruktur ermöglicht, die diese Eigenschaft nutzt und bei Einstecken jedes Kabel die Spannung kurzzeitig erhöht und danach die Kommunikationsfähigkeit testet, wobei die Kommunikation über ein binäres Signal, das ein Fahrzeugdirekt mit Spannung versorgt, über ein auf eine Versorgungsspannung aufmoduliertes Signal oder ein anderes Kommunikationsverfahren erfolgt.

8. Ladekabel nach Anspruch 1, dass den in ISO/IEC 61851 geforderten Widerstand mit einer in Serie geschalteten spezifischen Induktivität verwendet mit dazu passender Ladestation, die den Spannungsverlauf bei Schaltung und gegebenenfalls Veränderung der Frequenz der Wechselspannung zur Abfrage des Widerstands misst und darüber Rückschlüsse auf die Eigenschaft des Kabels zieht, wobei nach Schaltung eines Relais die Kommunikation über ein binäres Signal, das die Gegenstelle direkt mit Spannung versorgt, über ein auf eine Versorgungsspannung aufmoduliertes Signal oder ein anderes Kommunikationsverfahren erfolgt.

9. Ladekabel nach Anspruch 1, dass den in ISO/IEC 61851 geforderten Widerstand mit einer parallelen spezifischen Kapazität implementiert mit einer dazu erweiterten Ladestation, die den Spannungsverlauf bei Veränderung der Frequenz der Wechselspannung zur Abfrage des Widerstands und der Kapazität misst und darüber Rückschlüsse auf die Eigenschaft des Kabels zieht, wobei die Kommunikation über ein binäres Signal, das eine Gegenstelle direkt mit Spannung versorgt, über ein auf eine Versorgungsspannung aufmoduliertes Signal oder ein anderes Kommunikationsverfahren erfolgt.

10. Verfahren zum Erkennen eines Kabels nach einem der Ansprüche 1 - 9 durch eine Ladeinfrastruktur.

11. Verfahren zum Erkennen eines Kabels nach Anspruch 10, **dadurch gekennzeichnet, dass** nach dem Erkennen des Kabels eine Kommunikations- und/oder Stromversorgungsleitung freigeschaltet wird.

## Claims

1. A Charging cable with extended functionality, wherein the charging cable has at its respective ends two plugs, preferably standardized in accordance with ISO/IEC 61851, comprising at least a proximity and a pilot conductor, which can be connected to a charging infrastructure and a vehicle, **characterized in that** the charging cable has a logic, which may be arranged in the plugs or in the cable itself, wherein the logic can be connected to the proximity and/or to the pilot conductor, wherein after the charging cable has been connected to the charging station and the vehicle, the charging cable can be addressed by the charging station in such a way that the charging station detects on the basis of the proximity that the charging cable is a charging cable having expanded functionality and the logic can be supplied with current by the proximity and/or the pilot conductor.

2. Charging cable according to claim 1, **characterized in that** the proximity has addressable properties such as inductance or capacitance

3. Charging cable according to claim 1, **characterized in that** the proximity comprises a relay instead of a specific resistance of the standardized plug.

4. Charging cable according to the preceding claims 1 to 3, **characterized in that** the logic provides further functions, independently of charging the vehicle.

5. Charging Cable according to one of the preceding claims, **characterized in that** the logic enables a car-sharing process without direct participation of people of a car-sharing company.

6. Charging cable according to claim 1, wherein the logic enables the consumed power requested by the resistance according to the standard ISO / IEC to control the lighting of the plug of the charging cable, or the operation of a simple logic, as a plug-in control display.

7. Charging cable according to claim 1, wherein a relay reacts instead of the resistance required by standard ISO / IEC 61851, which switches at a short time of increased tension and subsequently enable a communication with the cable including the charging infrastructure that uses this property and wherein in case of plug-in each cable increases the tension for a short time and then tests the communication skills, wherein the communication occurs via a binary signal which directly supplies the vehicle with a voltage, via a signal which is modulated over a supply voltage or another communication method.

8. Charging cable according to claim 1, which uses the resistance required by the standard required by ISO / IEC 61851 with a series-specific inductance in combination with this matching charging station, which measures the voltage characteristics in case of switching and possibly changing the frequency of the alternating current voltage in order to interrogate the resistance and wherein further conclusions about the property of the cable is drawn, wherein after switching of a relay the communication takes place via a binary signal, which directly provides the counter site with a voltage via a signal which is modulated over a supply voltage or another communication method.

9. Charging cable according to claim 1, which implements the resistance required by the standard required by ISO / IEC 61851 with a parallel specific capacity with an for this extended charging station, which measures the voltage characteristics in case of changing the frequency of the alternating current voltage in order to interrogate the resistance and wherein further conclusions about the property of the cable is drawn, wherein the communication takes place via a binary signal, which directly provides the counter part with a voltage via a signal which is modulated over a supply voltage or another communication method.

10. A method for detecting a cable according to one of claims 1 - 9 by a charging infrastructure.

11. Method for detecting a cable according to claim 10, **characterized in that** after detection of the cable a communication and / or power supply line is enabled.

## Revendications

1. Câble de chargement avec une fonctionnalité étendue, le câble de chargement présentant sur ses extrémités respectives deux fiches standardisées de préférence selon la norme ISO/CEI 61851, comprenant au moins une proximité et un conducteur pilote, qui peuvent être reliés à une infrastructure de chargement et un véhicule, **caractérisé en ce que** le câble de chargement présente une logique qui peut être agencée dans les fiches ou dans le câble même, la logique pouvant être raccordée à la proximité et/ou au conducteur pilote, le câble de chargement étant disponible après la liaison avec le poste de chargement et le véhicule par le poste de chargement de telle manière que le poste de chargement détecte sur la proximité qu'il s'agit d'un câble de chargement avec une fonctionnalité étendue et la logique peut être alimentée en courant par le biais de la proximité et/ou du conducteur pilote.

2. Câble de chargement selon la revendication 1, **caractérisé en ce que** la proximité présente des propriétés de disponibilité telles que l'inductance ou la capacité.

3. Câble de chargement selon la revendication 1, **caractérisé en ce que** la proximité comporte un relais à la place d'une résistance spécifique à la fiche standardisée.

4. Câble de chargement selon les revendications précédentes 1 à 3, **caractérisé en ce que** d'autres fonctions peuvent être mises à disposition par la logique indépendamment du chargement du véhicule.

5. Câble de chargement selon l'une quelconque des revendications précédentes, **caractérisé en ce que** la logique permet un processus de partage de voiture sans participation directe de personnes d'une entreprise de partage de voiture.

6. Câble de chargement selon la revendication 1, **caractérisé en ce que** la résistance exigée par la norme ISO/CEI 61851 utilise la puissance consommée à l'aide d'une logique afin de commander ainsi l'éclairage d'une fiche du câble de raccordement ou le fonctionnement d'une simple logique telle qu'une indication d'état d'enfichage.

7. Câble de chargement selon la revendication 1, **caractérisé en ce qu'**il permute la résistance exigée dans la norme ISO/CEI 61851 à l'aide d'un relais avec la résistance spécifique qui commute en cas de tension accrue à court terme et permet par la suite la communication avec le câble, y compris une infrastructure de chargement qui utilise cette propriété et augmente à court terme la tension lors de l'enfichage de chaque câble et teste ensuite la capacité de communication, la communication étant effectuée par un signal binaire qui alimente directement un véhicule en tension, par un signal modulé sur une tension d'alimentation ou un autre procédé de communication.

8. Câble de chargement selon la revendication 1, **caractérisé en ce qu'**il utilise la résistance exigée dans la norme ISO/CEI 61851 avec une inductance spécifique montée en série avec un poste de chargement adapté à celle-ci qui mesure la courbe de tension lors de la mise en circuit et éventuellement la modification de la fréquence de la tension alternative pour l'interrogation de la résistance et tire par là même des conclusions sur la propriété du câble, la communication étant effectuée par un signal binaire qui alimente directement le point antagoniste en tension, par un signal modulé sur une tension d'alimentation ou un autre procédé de communication après la mise en circuit d'un relais.

9. Câble de chargement selon la revendication 1, **caractérisé en ce qu'**il implémente la résistance exigée dans la norme ISO/CEI 61851 avec une capacité spécifique parallèle avec un poste de chargement élargi à cet effet qui mesure la courbe de tension lors de la modification de la fréquence de la tension alternative pour l'interrogation de la résistance et mesure la capacité et tire par là même des conclusions sur la propriété du câble, la communication étant effectuée par un signal binaire qui alimente directement un point antagoniste en tension, par un signal modulé sur une tension d'alimentation ou un autre procédé de communication.

10. Procédé de détection d'un câble selon l'une quelconque des revendications 1 à 9 par une infrastructure de chargement.

11. Procédé de détection d'un câble selon la revendication 10, **caractérisé en ce qu'**un câble de communication et/ou d'alimentation en courant est mis hors tension après la détection du câble.
